Europäisches Patentamt

European Patent Office

Office européen des brevets

(11) Veröffentlichungsnummer: **0 321 599 B1**

(19)

# EUROPÄISCHE PATENTSCHRIFT

(12)

(45) Veröffentlichungstag der Patentschrift: **28.10.92**

�['51] Int. Cl.⁵: **B23Q 17/09**

(21) Anmeldenummer: **87119031.0**

(22) Anmeldetag: **22.12.87**

(54) **Anordnung zur Messung der Zerspanungskräfte bei Werkzeugmaschinen.**

(43) Veröffentlichungstag der Anmeldung:
**28.06.89 Patentblatt 89/26**

(45) Bekanntmachung des Hinweises auf die
Patenterteilung:
**28.10.92 Patentblatt 92/44**

(84) Benannte Vertragsstaaten:
**AT CH DE GB LI**

(56) Entgegenhaltungen:
**EP-A- 0 203 490**
**DE-A- 3 019 751**
**DE-A- 3 313 960**

**WERKSTATTSTECHNIK - ZEITSCHRIFT FÜR INDUSTRIELLE FERTIGUNG, Band 76, Nr. 11, November 1986, Seiten 649-653, Springer Verlag, Berlin, DE; H. PEGELS: "Integrierte Werkzeugüberwachung für die Drehbearbeitung"**

**Idem**

(73) Patentinhaber: **Kistler Instrumente AG**
**Eulachstrasse 22**
**CH-8408 Winterthur(CH)**

(72) Erfinder: **Wolfer, Peter**
**Alte Steinerstrasse 9**
**CH-8451 Kleinandelfingen(CH)**
Erfinder: **Pfeifer, Hans Peter**
**Altweg 12**
**CH-8450 Andelfingen(CH)**
Erfinder: **Spur, Günter, Prof. Dr.-Ing.Drs.h.c.**
**Richard-Strauss-Strasse 20**
**W-1000 Berlin 33(DE)**
Erfinder: **Siebert, Jan C., Dipl.-Ing.**
**Eisenacher Strasse 103**
**W-1000 Berlin 30(DE)**
Erfinder: **Benzinger, Klaus-Jürgen, Dr.-Ing.**
**Lüderitzstrasse 4**
**W-1000 Berlin 65(DE)**

(74) Vertreter: **Schmidt, Horst, Dr.**
**Siegfriedstrasse 8**
**W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Anordnung zur Messung wenigstens einer Kraftkomponente bei der zerspanenden Bearbeitung auf Werkzeugmaschinen sowie die Verwendung einer derartigen Anordnung zur Kalibrierung bestehender Überwachungssensoren von Werkzeugmaschinen, gemäß dem Oberbegriff von Anspruch 1.

Bei der spanabhebenden Bearbeitung entstehen zwischen Werkstück und Werkzeug Prozesskräfte, welche eine Formänderung zur Folge haben. Zwischen der Formänderung und den sie bewirkenden Kräften besteht ein Zusammenhang. Die Messung der Prozesskräfte hat ferner eine besondere Bedeutung bei der Automatisierung von Zerspanungsprozessen erlangt. Wenn bei kontinuierlichen oder sich zyklisch wiederholenden Prozessen die gemessenen Prozesskräfte vom üblichen Bereich abweichen, kann daraus geschlossen werden, dass der Prozess nicht mehr ordnungsgemäss abläuft und eine Korrektur erfolgen sollte. Dieser Schluss ist allerdings nur zulässig, wenn die Messgenauigkeit und Funktionszuverlässigkeit der verwendeten Sensoren zur Überwachung der Prozesskräfte von Zeit zu Zeit überprüft werden kann, d.h. wenn die Messanordnung mit einem sehr präzisen und zuverlässig funktionierenden Messinstrument kalibrierbar ist.

Die bisher üblichen Kraft-Messverfahren beruhen darauf, die Kräfte oder auch Teilkräfte innerhalb eines Maschinenteiles oder zwischen zwei Maschinenteilen zu messen. Solche Messanordnungen können im allgemeinen nicht ohne wesentliche Maschinenänderungen montiert oder demontiert werden. Eine derartige Messanordnung ist in der CH-A-502 590 beschrieben und umfaßt zur Kraft- und Momentenmessung vier piezoelektrische Kraftmesselemente zwischen zwei Krafteinleitungsplatten, was eine saubere Aufteilung der eingeleiteten Kraft in die drei räumlichen Komponenten ermöglicht. Diese Messanordnung kann z.B. zwischen zwei beweglichen Maschinenteilen angeordnet werden, um die an dieser Stelle herrschenden Kräfte und Momente zu ermitteln. Eine weitere in einer Ebene zwischen zwei Maschinenteilen wirksame Messanordnung ist in der DE-C-34 40 670 beschrieben. Auch hierbei sind vier druckempfindliche Messzellen in einem Rechteck in einer Zwischenplatte vorgesehen, und über ein Rechenwerk lässt sich mindestens eine Schubkraftkomponente bestimmen, die beispielsweise auf einen Drehstahl wirkt. Bekannt ist es ferner, in einem Maschinenteil Bohrungen einzubringen, in welche Messwandler in Gestalt sog. Messdübel eingeführt werden, welche die quer oder längs zu den Bohrungen wirkenden Materialspannungen ermitteln. Solche Anordnungen werden z.B. in der DE-A-34 07 620 und US-A-44 12 456 beschrieben. Mit diesen Anordnungen können nur Teilkräfte ermittelt werden, und außerdem erlauben sie nicht die Erfassung definierter Kraftkomponenten; sie stellen vielmehr Überwachungssensoren dar und dienen vornehmlich der routinemässigen Maschinenfunktionsüberwachung.

Nachteil sämtlicher bekannter Messanordnungen ist ferner, daß diese relativ entfernt vom Zerspanungswerkzeug angebracht werden müssen, was die Messung der an dieser Stelle tatsächlich herrschenden Kräfte erschwert oder unmöglich macht, weil die vorhandenen Kraftnebenschlüsse nur schwer kontrollierbar sind. Ebenso ist die Überlagerung erheblicher Massenkräfte zu berücksichtigen. Eine Präzisionsmessung der am Angriffspunkt des Zerspanungswerkzeuges wirksamen Kräfte insbesondere deren Komponenten, wie sie z.B. in der den nächstliegenden Stand der Technik definierenden DE-A-3 313 960 beschrieben ist, war auch deshalb bislang nur in unvollkommener Weise möglich, weil die bekannten Mehrkomponenten-Kraftmesseinrichtungen nicht ohne weiteres an die jeweilige Werkzeugmaschine adaptierbar sind und ausserdem an die betreffenden Zerspanungswerkzeuge, z.B. Drehstähle, jeweils gezielt individuell angepasst werden müssen.

In Anbetracht dieser mit bekannten Messanordnungen verbundenen Schwierigkeiten liegt der Erfindung die Aufgabe zugrunde, eine Anordnung der eingangs erwähnten Gattung zu schaffen, die eine präzise Messung der Zerspanungskräfte unmittelbar am Schneidwerkzeug ermöglicht und an unterschiedliche Werkzeuge und Werkzeugmaschinen angepasst werden kann.

Diese Aufgabe wird erfindungsgemäss dadurch gelöst, dass der Basisteil als modulare Einheit mit einem weiteren Montageabschnitt zur lösbaren Anbringung eines dem Montageabschnitt angepassten Befestigungsteiles eines an die Werkzeugmaschine anpassbaren Werkzeughalterträgers ausgebildet ist. Der Basisteil mit dem darin integrierten Dynamometer ist universell verwendbar; die notwendige Anpassung an die Verhältnisse der jeweiligen Werkzeugmaschine und Werkzeuge erfolgt über entsprechend gestaltete Schnittstellen. Vorzugsweise ist der Basisteil mit einem Spannteil mit einer Schnittstelle zur Verspannung des Werkzeuges gegenüber dem Dynamometer und mit einem Befestigungsteil mit einer Schnittstelle zur Befestigung an einem werkzeugmaschinenseitigen Träger kombinierbar. Das Spann- und Befestigungsteil können daher normgerecht ausgebildet sein, um mit unterschiedlichen Normwerkzeugen bzw. standardisierten werkzeugmaschinenseitigen Trägersystemen zusammenwirken zu können. Beim Befestigungsteil kann es sich insbesondere gemäss einer Weiterbildung der Erfindung um einen Spannflansch handeln, der durch eine geeignete Montageeinrichtung, z.B. einen Zylinderschaft oder eine Klemmeinrichtung, an einem werkzeugmaschinenseitigen Revolverträger befestigbar ist. Das Dynamometer (hierunter ist eine elektro-mechanische Wandleranordnung zur Messung von Kräften und Momenten zu verstehen) ist im Basisteil des Werkzeughalters so angeordnet, dass damit ein Werkzeug, z.B. Drehstahl direkt in Eingriff gebracht werden kann. Dadurch werden durch Kraftnebenschlüsse und dgl. bedingte Fehlmessungen vermieden und ist somit die Voraussetzung für eine hochpräzise Kraftmessung geschaffen. Wegen der vielseitigen Kombinierbarkeit mit unterschiedlichen Spann- und Befestigungsteilen bietet sich ferner eine Serienfertigung wenigstens des Basisteiles des Halters mit dem darin integrierten Dynamometer an. Die hochpräzise Erfassung der am Werkzeug herrschenden Kräfte oder Momente bedeutet ferner, dass die Dynamometeranordnung geeignet ist, an der Werkzeugmaschine vorgesehene Überwachungssensoren zu kalibrieren bzw. auf ihre ordnungsgemässe Funktion hin zu überprüfen. Dies kann z. B. dadurch erfolgen, dass eine Dynamometeranordnung nach der Erfindung an der Werkzeugmaschine montiert wird und die bei der Bearbeitung eines Werkstückes von den Überwachungssensoren der Maschine und dem Dynamometer abgegebenen Messignale miteinander verglichen werden. Der Werkzeughalter mit integriertem Dynamometer eignet sich ferner zur Auffindung signifikanter Prozessparameter bei der Zerspanung neuartiger Werkstoffe und/oder Verwendung neuartiger Schneidmaterialien sowie für die direkte Werkzeugüberwachung bei größeren Maschinen. Außerdem kann damit das Zerspanungsverhalten verschiedener Werkzeugmaschinen verglichen werden, da wegen der fehlenden durch die Konstruktion der Maschinen bedingten unterschiedlichen Kraftnebenschlüsse aussagefähige Vergleichsmessungen erzielbar sind.

Die Messelemente des Dynamometers können gemäß Weiterbildungen der Erfindung für zwei oder sämtliche Kraftkomponenten Fx, Fy, Fz empfindlich sein. Vorzugsweise ist ferner gemäß einer anderen Weiterbildung der Erfindung in den Halter ein Kühlmittelzuführsystem integriert. Ferner kann nach einer anderen Weiterbildung der Erfindung das Werkzeug so im Halter gehalten sein, dass seine Schneidebene durch die Mittellinie einer am Halter vorgesehenen Montageeinrichtung oder eines Schaftes geht. Nach einer anderen Weiterbildung der Erfindung kann eine Mess- und Auswerteelektronik wenigstens teilweise in den Halter integriert sein. Die Messelemente sind vorzugsweise so im Basisteil untergebracht, dass sie gegen ein Eindringen von Kühlmittel und anderen aggressiven Medien bzw. Flüssigkeiten abgedichtet sind. In den Halter kann ferner ein Anschlusskabel für die Ableitung der Signale des Dynamometers integriert sein. Um weitere erfindungsgemäße Werkzeughalter in unmittelbarer Nähe plazieren zu können, sollte dieser Normabmessungen haben.

Ein weiterer Gesichtspunkt der Erfindung ist die Bereitstellung eines Verfahrens zum Kalibrieren der elektro-mechanischen Überwachungssensoren von Werkzeugmaschinen anhand eines Vergleiches der Signale einer an der Werkzeugmaschine montierten Dynamometeranordnung nach der Erfindung mit den von den Überwachungssensoren abgegebenen Signalen unter gleichen Zerspanungsbedingungen.

Die Erfindung wird nachfolgend anhand einer bevorzugten Ausführungsform und der Zeichnung näher erläutert. Es zeigen:

Fig. 1    in perspektivischer teilweise schematischer Ansicht die erfindungsgemässe Anordnung aus einem Dynamometer und einem modular aufgebauten Werkzeughalter,

Fig. 2    in schematischer Ansicht die Dynamometer/Werkzeughalteranordnung mit demontierten Aufbauteilen zur Darstellung des modularen Aufbaues und mit einer Einrichtung zur elektronischen Verarbeitung der Messignale,

Fig. 3    in perspektivischer Teilansicht eine Ausführung eines geeigneten Dynamometers zur Integration im Werkzeughalter,

Fig. 4    in perspektivischer Draufsicht eine automatische Drehmaschine mit einer Werkzeughalter/Dynamometeranordnung nach der Erfindung zur Veranschaulichung der Kalibrierung bestehender Überwachungssensoren.

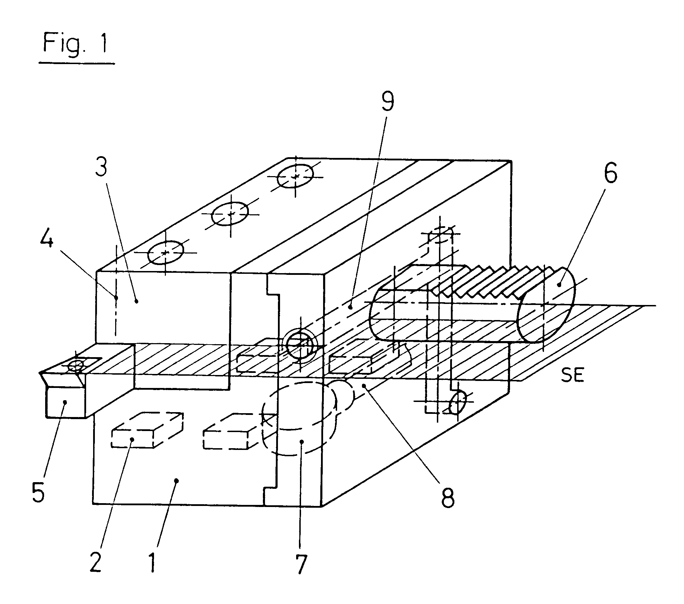

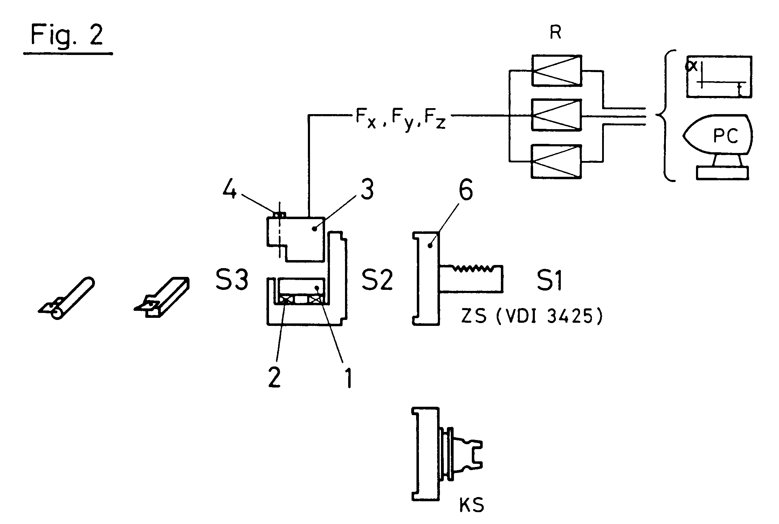

Nach Fig. 1 umfaßt der Werkzeughalter ein Basisteil 1 mit einem darin integrierten Dynamometer mit im vorliegenden Fall vier Messelementen 2, ein Spannteil 3, mit dessen Hilfe das Werkzeug 5 gegenüber dem Basisteil insbesondere dem Dynamometer verspannt werden kann, und ein Befestigungsteil 6, durch das der Werkzeughalter an einem nicht gezeigten maschinenseitigen Träger oder Support befestigt werden kann. Bei der gezeigten Ausführungsform handelt es sich beim Befestigungsteil 6 um einen sog. Spannflansch, auf den im übrigen in Verbindung mit der Beschreibung von Fig. 2 noch näher eingegangen wird. Das Werkzeugspannteil 3, das Basisteil 1 und das Befestigungsteil 6 bilden Schnittstellen S1, S2, S3, wie dies in Fig. 2 gezeigt ist. Die Schnittstelle zwischen dem Befestigungsteil oder Spannflansch 6 und dem nicht dargestellten Träger, z.B. Revolver, der Werkzeugmaschine, ist mit S1 bezeichnet, die Schnittstelle zwischen Basisteil 1 und Befestigungsteil 6 mit S2 und die Schnittstelle zwischen Basisteil 1 und Spannteil 3 mit S3.

Vorzugsweise ist ferner in den Werkzeughalter ein Kühlwasser-Zufuhrsystem integriert. Zu diesem Zweck kann im Befestigungsteil 6 eine Bohrung 9 vorgesehen sein, von deren nicht bezeichnetem Ausgang ein Schlauch zur Schneide des Werkzeuges bzw. Drehstahles 5 geführt werden kann. In Fig. 1 ist weiterhin ein integrierter gegen das Eindringen von Kühlwasser und anderen Flüssigkeiten abgedichteter Kabelanschluss 7 mit zugehörigem Kabel 8 zu erkennen, über das die Messignale von den Messelementen 2 abgeführt werden können. Als Alternative könnten die elektrischen Kabelverbindungen auch ausserhalb der durch das Kühlwasser beeinflussten Zone des Halters verlegt sein. In jedem Fall ist darauf zu achten, dass ins Innere des Basisteiles 1 insbesondere in den Bereich des Dynamometers keine Flüssigkeiten hineingelangen, da hierdurch die elektrische Isolation und die Funktionsfähigkeit der elektrischen Kontakte beeinträchtigt werden könnte.

Nicht dargestellte Spannschrauben können vorgesehen sein, um die Messelemente 2 mit einer geeigneten Kraft vorzuspannen. Zur Verspannung des Werkzeuges 5 gegenüber dem Dynamometer kann das Spannteil 3 Klemmschrauben 4 aufweisen. Bei der dargestellten Ausführungsform ist das Werkzeug 5 seitlich des Spann- bzw. Basisteiles 1,3 fixiert. Das Werkzeug könnte jedoch auch an einer geeigneten Stelle längs der Breitseite des Halters fixiert sein.

Wie dargestellt, umfasst der Befestigungsteil oder Spannflansch 6 einen Zylinderschaft ZS, dessen Mittellinie Z vorzugsweise in einer Ebene liegen sollte, die durch die Schneidebene SE des Werkzeuges 5 geht. Hierdurch werden durch die Geometrie des Schneidvorganges bedingte unerwünschte Kraftwirkungen vermieden, was insbesondere bei Werkstücken mit kleinerem Durchmesser den Zerspanungsvorgang beeinflussen kann. Der Zylinderschaft ZS dient der Befestigung des Halters am Träger oder Revolver der Werkzeugmaschine und kann gemäss VDI Norm 3425 ausgebildet sein. Der Anschluss des Befestigungsteiles 6 am Revolver könnte auch durch ein Klemmsystem KS erfolgen, wie es in Fig. 2 gezeigt ist. Es sind jedoch auch andere Anschlusselemente möglich. Vorzugsweise sollte der Werkzeughalter möglichst klein ausgebildet sein und Normabmessungen haben, so dass bei der praktischen Anwendung mehrere derartige Werkzeughalter in unmittelbarer Nähe plaziert werden können. Der Basisteil 1 des Werkzeughalters kann ferner, wenn erwünscht, als Messdübel entsprechend der Anordnung nach der DE-OS 34 07 620 ausgestaltet sein.

Fig. 2 zeigt den modularen Aufbau des Werkzeughalters. S1, S2, S3 bezeichnen dabei die Schnittstellen, d.h. lösbaren Verbindungen, zwischen dem Träger bzw. Revolver (nicht dargestellt) der Werkzeugmaschine und dem Befestigungteil 6 (S1), zwischen dem Befestigungsteil 6 und dem universellen Basisteil 1 (S2), bzw. zwischen dem Basisteil 1 und dem Spannteil 3 (S3). Diese Schnittstellen können, wie erwähnt, sehr verschiedenartig gestaltet werden. Das Spannteil 3 ist vorzugsweise mit einer oder mehreren Klemmschrauben 4 zur Fixierung von Aussen- und Innendrehstählen versehen.

Die durch die Messelemente 2 des Dynamometers abgegebenen Signale, beispielsweise für ein oder meherere der drei Kraftkomponenten Fx, Fy, Fz, können in einem Rechenwerk R weiterverarbeitet und einem Computer (PC) zugeführt werden. Auf dem Bildschirm lassen sich dann signifikante mechanische Zusammenhänge wie z.B. Abhängigkeit der Schnittkraft von der Schnittgeschwindigkeit und dgl. darstellen. Nicht dargestellt ist ferner die Möglichkeit, den Elektronikteil mindestens teilweise ebenfalls in den Werkzeughalter zu integrieren, was u.a. die Störanfälligkeit durch externe Kabelverbindungen vermindert.

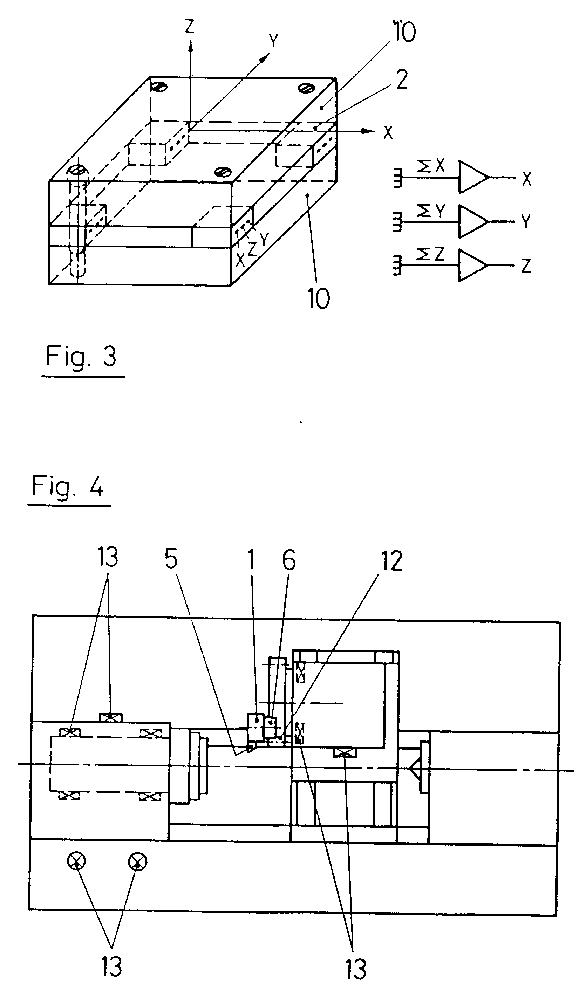

Fig. 3 zeigt eine typische Anordnung von vier Messelementen zu einem Dynamometer, wie sie in der eingangs erwähnten CH-PS 502 590 beschrieben ist. Mit 10 sind Krafteinleitungsplatten bezeichnet, mit 2 die in verschiedenen Achsen x, y, z empfindlichen Messelemente, und mit 11 Vorspannschrauben, welche die Messelemente 2 unter eine geeignete Vorspannung setzen, die so hoch sein kann, dass auch Schubkräfte in x- und y-Richtungen gemessen werden können. Wenn nur die Kraftkomponenten in den drei angegebenen Richtungen (x, y, z) gemessen werden sollen, also Fx, Fy, Fz, können die entsprechenden Signalausgänge der vier Messzellen 2, die in Fig. 3 ebenfalls mit x, y, z bezeichnet sind, kanalweise parallel geschaltet und einzeln verstärkt werden, wie das Schema rechts in Fig. 3 zeigt. Wenn nicht nur Kräfte, sondern auch Drehmomente gemessen werden sollen, sind entsprechende Berechnungen notwendig, die z.B. durch ein Rechenwerk vorgenommen werden könnten, wie es in Fig. 2 dargestellt ist. Bezüglich der Grundlagen für diese Berechnungen kann z.B. auf die CH-PS 502 590 verwiesen werden.

Nicht in jedem Anwendungsfall müssen Dreikomponenten-Messelemente 2 eingesetzt werden. Ggf. genügt schon die Messung einer einzigen Kraftkomponente, um einen genügenden Aufschluss über die am Angriffspunkt des Werkzeuges herrschenden Kräfte zu erreichen. Es versteht sich, dass ein Einkomponenten-Messelement kostengünstiger ist als ein Mehrkomponenten-Messelement ist. Auch werden nicht in jedem Anwendungsfalle vier Kraftmesselemente benötigt. Gerade beim Drehen genügen oft drei derartige Elemente, da der Kraftangriffspunkt relativ zum Dynamometer seine Lage nur in engen Grenzen ändert. Zudem ist eine Anordnung von vier Messelementen zwischen zwei Krafteinleitungsplatten eine spezielle Ausführung eines Dynamometers, es sind aber auch Anordnungen möglich, bei denen die einzelnen Kraftmesselemente auf andere, weniger starre Weise in den Basisteil 1 des Werkzeughalters integriert sind. Die einzelnen Messelemente können auf an sich bekannter piezoelektrischer wie auch anderer Kraft- und Dehnungsmesstechnik, z.B. mittels Dehnungsmesstreifen, beruhen.

Anhand von Fig. 4 wird ein Kalibrierverfahren für die Überwachungsfunktion von Werkzeugmaschinen beschrieben. Dargestellt ist ein Drehautomat, der mit verschiedenen Überwachungssensoren 13 bestückt und auf dessen Revolver 12 das Werkzeughalter-Dynamometer nach der Erfindung mit dem Drehstahl 5 montiert ist. Die Überwachungssensoren 13 können Lochsensoren Längs- und Quermessdübel) sein, wie sie eingangs erwähnt wurden, und welche Materialspannungen messen. Auch Überwachungssensoren in Form von Messunterlagsscheiben können zwischen Revolver und Schlitten angebracht sein. Diese Überwachungssensoren in Form von Messunterlagsscheiben können z.B. zwischen Revolver und Schlitten angebracht sein. Die Überwachungssensoren müssen von Zeit zu Zeit kalibriert werden. Dazu bedarf es eines präzisen Kalibrierinstrumentes, das möglichst nahe am Werkzeug die auftretenden Kräfte misst. Diese Funktion kann in hervorragender Weise durch das Werkzeughalter-Dynamometer erfüllt werden. Nach der Montage des Dynamometers an der Maschine mittels des Befestigungsteiles 6 des Halters wird bei eingeschalteten Sensoren 13 ein Probewerkstück bearbeitet. Anhand eines Vergleiches der sich ergebenden (präzisen) Messignale des Dynamometers mit den Signalen der Sensoren 13 kann deren Funktion beurteilt werden oder lässt sich eine Kalibrierung dieser Sensoren vornehmen.

Durch die Erfindung ist eine neue Generation von Schnittkraftdynamometern geschaffen, welche eine hohe Betriebssicherheit besitzen und einfach zu handhaben sind, da sie wegen ihres modularen Aufbaues an die verschiedensten Standardausführungen von maschinenseitigen Werkzeugspannsystemen leicht angepasst und mit den verschiedensten Normwerkzeugen bestückt werden können. Durch die Integration des elektro-mechanischen Messteiles in den Werkzeughalter wird eine konstruktive Einheit, bestehend aus Werkzeughalter, Dynamometer und Werkzeug geschaffen, welche eine Krafteinleitung auf direktem kurzem Weg unter keinen oder nur minimalen, zumindest jedoch genau kontrollierbaren Kraftnebenschlüssen ermöglicht. In Hinblick auf die weitere Minimierung von Kraftnebenschlüssen haben sich Schweisskonstruktionen für den Halter als besonders vorteilhaft erwiesen. Die Dynamometeranordnung kann zur Überprüfung von Überwachungssensoren an Werkzeugmaschinen, zur Auffindung von signifikanten Prozessparametern bei der Zerspanung neuartiger Werkstoffe mit neuartigen Schneidstoffen oder zum Vergleich des Zerspanungsverhaltens verschiedener Werkzeugmaschinen herangezogen werden. Bei grösseren Maschinen kann sie auch zur Werkzeugüberwachung eingesetzt werden. Der modulare Aufbau und die dadurch mögliche Standardisierung erlauben eine Serienfabrikation insbesondere des universell verwendbaren Basisteiles des Halters mit integriertem Dynamometer.

**Patentansprüche**

1. Werkzeughalter mit einem ein integriertes Dynamometer enthaltenden Basisteil (1) zur Messung wenigstens einer Kraftkomponente bei der spanenden Bearbeitung auf Werkzeugmaschinen mit einem universellen Montageabschnitt (S3) zum Zusammenwirken mit einem Werkzeugspannteil (3), dadurch gekennzeichnet, dass der Basisteil (1) als modulare Einheit mit einem weiteren Montageabschnitt (S2) zur losbaren Anbringung eines dem Montageabschnitt angepassten Befestigungsteiles (6) eines an die Werkzeugmaschine anpassbaren Werzeughalterträgers ausgebildet ist.

2. Anordnung nach Anspruch 1, dadurch gekennzeichnet, dass die einzelnen Messelemente (2) des Dynamometers (2,10) für drei Kraftkomponenten (Fx,Fy,Fz) empfindlich sind.

3. Anordnung nach Anspruch 1, dadurch gekennzeichnet, dass die einzelnen Messelemente (2) des Dynamometers (2,10) für zwei der Kraftkomponenten (Fx, Fy, Fz) empfindlich sind.

4. Anordnung nach einem der Ansprüche 1 bis 3, dadurch gekennzeichnet, dass im Befestigungsteil ein Kühlmittelzuführsystem (9) integriert ist.

5. Anordnung nach einem der vorhergehenden Ansprüche, dadurch gekennzeichnet, dass das Werkzeug (5) so gehalten ist, dass seine Schneidebene durch eine Mittellinie des Befestigungsteiles (ZS,KS) geht.

6. Anordnung nach einem der vorhergehenden Ansprüche, dadurch gekennzeichnet, dass das Befestigungsteil (6) einen Spannflansch umfaßt, der durch einen Zylinderschaft (ZS) an einem werkzeugmaschinenseitigen Revolverträger befestigbar ist.

7. Anordnung nach einem der Ansprüche 1 bis 5, dadurch gekennzeichnet, dass der Befestigungsteil (6) einen Spannflansch umfaßt, der durch eine Klemmeinrichtung (KS) an einem werkzeugmaschinenseitigen Rovolverträger befestigbar ist.

8. Anordnung nach einem der vorhergehenden Ansprüche, dadurch gekennzeichnet, dass eine Mess- und Auswerteelektronik wenigstens teilweise im Halter integriert ist.

9. Anordnung nach einem der vorhergehenden Ansprüche, dadurch gekennzeichnet, dass die Messelemente (2) des Dynamometers (2,10) gegen ein Eindringen von Kühlmittel und anderen aggressiven Medien abgedichtet sind.

10. Anordnung nach einem der vorhergehenden Ansprüche, dadurch gekennzeichnet, dass ein Anschlusskabel (8) zur Ableitung der Signale des Dynamometers (2,10) abgedichtet im Basisteil (1) integriert ist.

11. Anordnung nach einem der vorhergehenden Ansprüche, dadurch gekennzeichnet, dass der Halter Normabmessungen hat.

12. Anordnung nach einem der vorhergehenden Ansprüche, dadurch gekennzeichnet, dass das Dynamometer (2,10) piezoelektrische Messelemente (2) umfasst.

## Claims

1. Toolholder with an integrated dynamometer containing a basic part (1) for measuring at least one force component during metal-cutting operations on machine tools, having a universal mounting part (S3) for interacting with a tool clamping part (3), characterized by the basic part (1) taking the form of a modular unit with another mounting part (S2) for fixing detachably a fixing part (6) matched to the mounting part of a toolholder support adaptable to the machine tool.

2. Arrangement according to Claim 1, characterized by the individual measuring elements (2) of the dynamometer (2, 10) being sensitive to three force components (Fx, Fy, Fz).

3. Arrangement according to Claim 1, characterized by the individual measuring elements (2) of the dynamometer (2, 10) being sensitive to two of the force components (Fx, Fy, Fz).

4. Arrangement according to one of the Claims 1 to 3 characterized by a coolant supply system (9) integrated in the fixing part S.

5. Arrangement according to one of the foregoing claims, characterized by the tool (5) being held so that its cutting plane passes through a centreline of the fixing part (ZS, KS).

6. Arrangement according to one of the foregoing claims, characterized by the fixing part (6) having a clamping flange fixable by a parallel shank (ZS) on a turret support belonging to the machine tool.

7. Arrangement according to one of Claims 1 to 5, characterized by the fixing part (6) having a clamping flange fixable by a clamping device (KS) on a turret support belonging to the machine tool.

8. Arrangement according to one of the foregoing claims, characterized by measuring and evaluation electronics being integrated at least partially in the holder.

9. Arrangement according to one of the foregoing claims, characterized by the measuring elements (2) of the dynamometer (2, 10) being sealed to prevent any ingress of coolant and other aggressive media.

10. Arrangement according to one of the foregoing claims, characterized by a connecting cable (8) for leading away the signals of the dynamometer (2, 10) being integrated tightly sealed in the basic part (1).

11. Arrangement according to one of the foregoing claims, characterized by the holder having standard dimensions.

12. Arrangement according to one of the foregoing claims, characterized by the dynamometer (2, 10) comprising piezoelectric measuring elements (2).

## Revendications

1. Porte-outils avec une pièce de base (1) contenant un dynamomètre intégré pour mesurer au moins une composante de la force au cours de l'usinage, avec enlèvement de copeaux sur machine-outil, avec une section de montage universelle (S3) coopérant avec une pièce de serrage d'outil (3), caractérisé en ce que la pièce de base (1) se présente sous forme d'une unité modulaire avec une autre section de montage (S2) en vue du placement amovible d'une pièce de fixation (6) adaptée à la section de montage d'un porte-outil adaptable à la machine-outil.

2. Dispositif selon la revendication 1, caractérisé en ce que les différents éléments de mesure (2) du dynamomètre (2, 10) sont sensibles à trois composantes de la force (Fx, Fy, Fz).

3. Dispositif selon la revendication 1, caractérisé en ce que les différents éléments de mesure (2) du dynamomètre (2, 10) sont sensibles à deux composantes de la force (Fx, Fy, Fz).

4. Dispositif selon l'une des revendications 1 à 3, caractérisé en ce qu'un système d'adduction de fluide de refroidissement (9) est intégré à la pièce de fixation.

5. Dispositif selon l'une des revendications précédentes, caractérisé en ce que l'outil (5) est fixé de façon à ce que son plan de coupe passe par un axe de la pièce de fixation (ZS, KS).

6. Dispositif selon l'une des revendications précédentes, caractérisé en ce que la pièce de fixation (6) comprend une bride de serrage qui peut être fixée par un arbre cylindrique (ZS) à un support revolver du côté de la machine-outil.

7. Dispositif selon l'une des revendications 1 à 5, caractérisé en ce que la pièce de fixation (6) comprend une bride de serrage qui peut être fixée par un dispositif de serrage (KS) à un support revolver du côté de la machine-outil.

8. Dispositif selon l'une des revendications précédentes, caractérisé en ce que des circuits électroniques de mesure et de traitement sont intégrés, au moins partiellement, dans un support.

9. Dispositif selon l'une des revendications précédentes, caractérisé en ce que les éléments de mesure (2) du dynamomètre (2, 10) sont fermés de manière étanche pour empêcher la pénétration du fluide de refroidissement et d'autres fluides agressifs.

10. Dispositif selon l'une des revendications précédentes, caractérisé en ce qu'un câble de raccordement (8) destiné à transmettre les signaux du dynamomètre (2, 10) est intégré à la pièce de base (1) d'une manière étanche.

11. Dispositif selon l'une des revendications précédentes, caractérisé en ce que le porte-outil a des dimensions normalisées;

12. Dispositif selon l'une des revendications précédentes, caractérisé en ce que le dynamomètre (2, 10) comprend des éléments de mesure piézoélectriques (2).

## Fig. 1

Fig. 2

$F_x, F_y, F_z$

R

PC

S3  S2  S1

ZS (VDI 3425)

KS

4  3  6

2  1

EP 0 321 599 B1

Fig. 3

Fig. 4